Europäisches Patentamt

European Patent Office

Office européen des brevets

(19)

(11) EP 0 790 587 A1

(12) DEMANDE DE BREVET EUROPEEN

(43) Date de publication:
20.08.1997 Bulletin 1997/34

(51) Int. Cl.⁶: $G07F\ 7/08$, $H04M\ 17/00$

(21) Numéro de dépôt: 97200344.6

(22) Date de dépôt: 07.02.1997

(84) Etats contractants désignés:
DE FR GB IT

(30) Priorité: 14.02.1996 FR 9601815

(71) Demandeur: Philips Electronics N.V.
5621 BA Eindhoven (NL)

(72) Inventeurs:
• Gasparini, Stéphane
75008 Paris (FR)
• Geffrotin, Bernard
75008 Paris (FR)

(74) Mandataire: Chaffraix, Jean
Société Civile S.P.I.D.
156, Boulevard Haussmann
75008 Paris (FR)

(54) **Système de transmission comportant des dispositifs terminaux munis d'un circuit de prépaiement, dispositif terminal convenant à un tel système et procédé mis en oeuvre dans un tel système**

(57) Ce système de transmission comporte une pluralité de dispositifs terminaux (1, 36, 37) munis d'au moins un circuit connectable (30) dans lequel est prévue une information de prépaiement. Les dispositfs terminaux (1, 36, 37) comportent des moyens pour modifier directement ladite information de prépaiement en fonction de la communication. En outre, il a été prévu des moyens de protection pour protéger ces informations relatives à ce prépaiement. Ainsi, on peut utiliser dans des réseaux GSM ou similaires des cartes de prépaiement.

Application : réseaux GSM ou similaires.

FIG.1

EP 0 790 587 A1

Printed by Rank Xerox (UK) Business Services
2.14.12/3.4

## Description

L'invention concerne un système de transmission comportant une pluralité de dispositifs terminaux pour permettre des communications, munis d'au moins un circuit connectable dans lequel est prévue une information de prépaiement et des moyens pour modifier directement ladite information de prépaiement en fonction de la communication.

L'invention concerne aussi un procédé de prépaiement mis en oeuvre dans le système ci-dessus et un dispositif terminal convenant à un tel système.

Le principe fondamental de ce genre de réseau de type GSM est que tous les dispositifs ci-dessus mentionnés sont banalisés initialement. La personnalisation du dispositif au profit d'un usager se fait ensuite au moyen du circuit connectable constitué généralement par une carte à puce appelée SIM ou Micro-SIM qui, une fois insérée dans le dispositif terminal, permet l'identification et l'authentification de l'usager vis-à-vis du réseau.

L'obtention d'une carte SIM se fait par un processus d'abonnement auprès d'une société de commercialisation (SCS) qui se charge de la gestion de l'abonné pour le compte de l'opérateur du réseau. Outre l'abonnement, la SCS gère également les opérations de facturation à partir des informations transmises par l'opérateur.

Ces opérations de gestion sont relativement coûteuses. De plus, il existe un risque financier non négligeable, certains abonnés "omettant" de payer leur factures.

Pour ces raisons, il apparaît intéressant aux opérateurs et aux SCS d'introduire un service réseau prépayé, à l'image de la télécarte en usage pour les cabines téléphoniques courantes. Une carte SIM de type prépaiement permet des communications correspondant à un montant ou à un nombre d'unités donnés. Ce concept apporte plusieurs avantages :

- simplification du processus de distribution des cartes SIM,
- plus d'enregistrement d'abonnement,
- pas d'opération de facturation,
- frais de gestion moindre,
- avance de trésorerie.

Il est connu du document de brevet PCT WO 95/28062 un système de prépaiement du genre mentionné ci-dessus. Cependant ce système présente l'inconvénient que, notamment, le circuit connectable est vulnérable de sorte que son contenu peut être modifié par des manoeuvres frauduleuses et aussi que les échanges d'informations entre ce circuit et le dispositif terminal peuvent être interceptés par des personnes malveillantes ce qui leur donne des moyens pour des tentatives de fraudes.

La présente invention propose un système du genre mentionné dans le préambule qui ne présente pas les inconvénients précités.

Pour cela, un système du genre mentionné dans le préambule est remarquable en ce que les dispositifs terminaux comportent des moyens de protection pour assurer l'intégrité des informations relatives au prépaiement.

L'idée de l'invention consiste à protéger toute l'information concernant les informations de prépaiement de sorte qu'il est pratiquement impossible pour un fraudeur de tricher sur le coût de ses communications.

Une caractérisique de l'invention selon laquelle le système du genre précité dans lequel les dispositifs terminaux fonctionnent à l'aide d'informations de fonctionnement emmagasinées dans une mémoire est remarquable en ce que lesdits moyens de protection sont formés par des moyens de détections de l'intégrité desdites informations de fonctionnement, donne une bonne certitude que ces informations n'ont pas été altérées par un fraudeur.

Une autre caractérisique de l'invention selon laquelle lesdits moyens de protection sont formés par des moyens d'authentification du dispositif terminal par le circuit connectable pour permettre la communication lorsque l'authentification est reconnue permet d'éviter qu'un fraudeur éventuel mette un autre circuit connectable qui l'avantagerait en ce qui concerne le coût des communications.

La description suivante faite en regard des dessins ci-annexés, le tout donné à titre d'exemple non limitatif, fera bien comprendre comment l'invention peut être réalisée.

La figure 1 montre un système conforme à l'invention.

La figure 2 montre un dispositif terminal de radio portable convenant au système de la figure 1.

La figure 3 montre un premier organigramme destiné à l'explication du fonctionnement du système de l'invention.

La figure 4 montre un deuxième organigramme destiné à l'explication du fonctionnement du système de l'invention.

La figure 5 montre un troisième organigramme destiné à l'explication du fonctionnement du système de l'invention.

La figure 6 montre un quatrième organigramme destiné à l'explication du fonctionnement du système de l'invention.

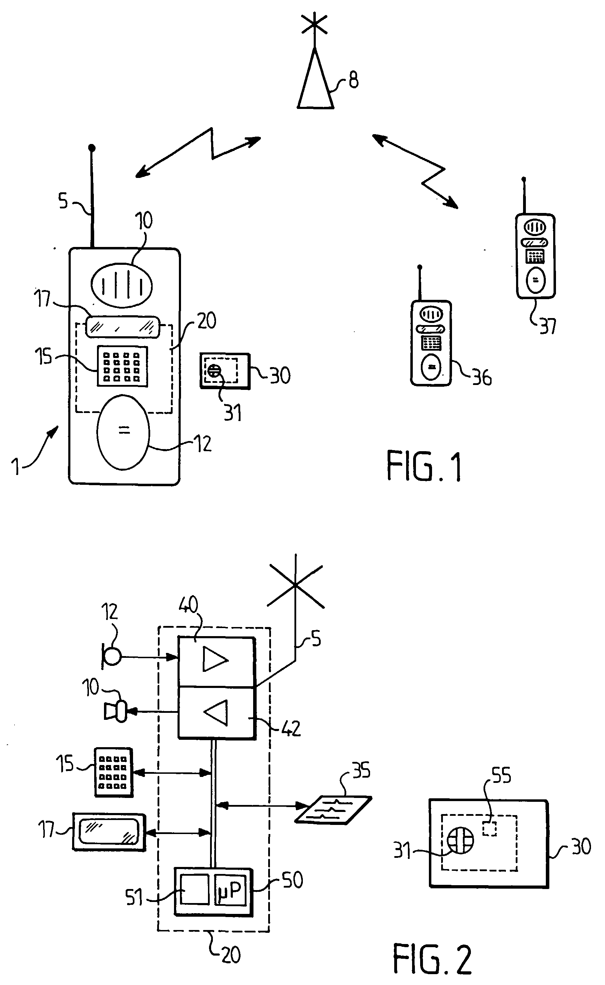

A la figure 1, le système montré comporte un premier dispositif terminal de radio portant la référence 1. Ce dispositif est muni d'une antenne 5 qui lui permet de recevoir et d'émettre des ondes vers une station de raccordement 8 d'un réseau radioélectrique du genre GSM. Le dispositif 1 comporte un écouteur 10, un microphone 12, un clavier 15 et un écran de visualisation 17. Les pointillés représentent une partie électronique 20 située à l'intérieur du dispositif. Selon les normes du GSM (I-ETS 300 045-1 ou ETS30), il est prévu une carte SIM de format ISO ou de format dit "plug in" ou micro SIM qui porte sur la figure 1, la référence 30. Cette carte est pourvue d'un connecteur 31 qui peut venir en contact avec un autre contact 35 faisant partie du dispositif 1. Cet autre contact 35 est montré sur la figure 2. Le système de la figure 1 comporte aussi d'autres dispositifs 36 et 37 dont la structure peut donc être semblable à celle du dispositif 1.

Sur la figure 2, qui détaille la structure du dispositif 1, les éléments communs avec ceux de la figure 1 portent les mêmes références. Il détaille la structure de la partie électronique 20.

Cette partie 20 comprend un ensemble d'émission 40 et un ensemble de réception 42 pour émettre et pour recevoir différentes informations usuelles dans la technique GSM, notamment celles provenant du microphone 12 et celles qui concernent l'écouteur 10. Un ensemble à microprocesseur 50 assure la gestion des éléments suivants : les parties émission et réception 40 et 42, le clavier 15 l'écran de visualisation 17 et l'échange d'informations avec le module SIM 30 via les connecteurs 35 et 31. Cet ensemble 50 comporte notamment une mémoire vive 55 de type EPROM de préférence, destinée à contenir des informations de prépaiement.

Selon l'invention, on souhaite que le système permette la facturation des communications sur la carte SIM.

Pour cela, un tel système doit satisfaire aux exigences suivantes :

- les cartes SIM doivent être débitées pour un montant correspondant au service fourni (exactitude du calcul de taxe),
- il n'est pas possible qu'un usager obtienne le service sans être débité des unités correspondantes (pas de fraude).

Principes de base de l'invention :

- la carte SIM est préchargée avec des unités, cette carte SIM pouvant être rechargée ou non à épuisement du solde,
- le dispositif terminal a la charge du débit de la carte SIM,
- la carte SIM ne peut être utilisée sur un réseau qu'à la condition qu'elle soit insérée dans un dispositif terminal capable de la débiter,
- le dispositif terminal contient un processeur sécurisé qui assure l'exécution des fonctions logicielles du dispositif terminal, ainsi que le déroulement dans un environnement protégé des algorithmes nécessaires au prépaiement,
- le processeur sécurisé est capable de vérifier l'intégrité du logiciel du dispositif terminal et d'en interdire le fonctionnement en cas de modification,
- un protocole cryptographique permet d'établir une liaison sécurisée entre le dispositif terminal et la carte SIM,

- le solde initial de la carte SIM, protégé cryptographiquement contre une éventuelle falsification, est lu par le dispositif terminal,
- le dispositif terminal peut s'assurer de l'authenticité du solde de la carte SIM et interdire la communication en cas de solde insuffisant,
- le dispositif terminal calcule le débit du SIM, soit sur des informations de tarification transmises par le réseau en début de communication, soit préinitialisées sous forme de tables,
- les instructions de débit adressées par le dispositif terminal à la carte SIM sont protégées cryptographiquement contre une éventuelle falsification,
- le débit de la carte SIM peut être contrôlé grâce au solde de la carte SIM protégé cryptographiquement contre une éventuelle falsification,
- le processeur sécurisé du dispositif terminal assure lui-même la vérification cryptographique du débit effectif du SIM,
- le dispositif terminal rompt la communication lorsque le solde de la carte SIM est épuisé.

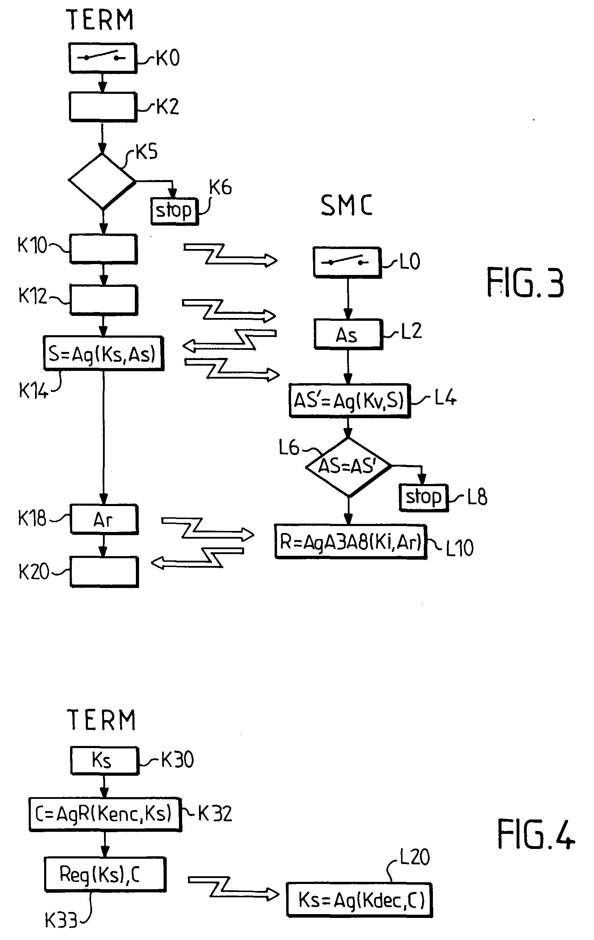

Les figures 3 et suivantes montrent le fonctionnement d'un tel système qui satisfait dans une bonne mesure aux exigences précitées.

Ce fonctionnement est divisé en quatre phases représentées respectivement par des organigrammes montrés aux figures 3 et suivantes. Ces différents organigrammes sont composés de deux parties :

- une partie TERM relative au fonctionnement du dispositif terminal 1 et
- une partie SMC relative, elle, à la carte à puce 30.

La phase montrée à la figure 3 commence à la case K0 qui indique la mise sous tension du dispositif terminal, une première opération consiste à vérifier l'intégrité du logiciel du dispositif terminal (voir case K2). Ceci est décrit dans la demande de brevet français n° 96 01 478 déposée le 7 février 1996 au nom de la demanderesse. Si le test qui suit (case K5) indique que le logiciel a été corrompu, on va alors à la case K6 qui indique l'arrêt du dispositif terminal 1. Si le logiciel est intact, on peut alors démarrer une opération d'authentification du dispositif terminal par la carte SIM pour s'assurer que le dispositif terminal est capable de gérer le débit des unités de communication. Celle ci se fait par un mécanisme "challenge/response".

Pour cela, on lance un ordre de mise en route (case K10) vers la carte SIM 30. La carte SIM se met alors en route (case L0). Après la mise sous tension du SIM, le dispositif terminal transmet ensuite, case K12, une demande de nombre aléatoire à la carte SIM. Celle-ci reçoit cette demande et fournit en réponse un nombre aléatoire As (case L2). Le dispositif terminal élabore au moyen d'un algorithme de cryptage impliquant une clé Ks et un nombre S qui est transmis à la carte SIM (case K14). La carte effectue une opération sur le nombre S reçu. Cette opération est définie par l'algorithme de cryptage, noté par Ag(Kv,S) à la case L4. Si l'algorithme implique le procédé de codage RSA, deux clés sont utilisées : Ks et Kv. Ces clés peuvent être identiques si on utilise un procédé symétrique tel que le DES. Les deux nombres AS et AS' peuvent être alors comparés par la carte, case L6. Si la comparaison indique une discordance le processus est alors stoppé (case L8). La carte est bloquée jusqu'à la prochaine mise sous tension.

L'étape suivante consiste classiquement à faire authentifier le SIM par le réseau ; c'est une procédure standard de la norme GSM qui utilise l'algorithme dit A3A8 (décrit dans les normes GSM), ceci est représenté à la case L10 par AgA3A8(..), et la clé Ki du SIM. Il est à noter que si l'authentification du dispositif terminal par la carte SIM ne s est pas terminée correctement, le traitement de la reconnaissance du SIM par le réseau ne pourra pas se dérouler, et par conséquent le réseau rejettera la connexion de ce mobile incapable de débiter le SIM. Pour cela, le dispositif terminal envoie un nombre aléatoire Ar à la carte (case K18), la carte calcule alors un nombre R en fonction de l'algorithme A3A8 et de la clé Ki comme cela vient d'être dit. Ce nombre est transmis au dispositif terminal qui l'envoie dans le réseau (case K20). C'est au niveau de la station de raccordement 8, par exemple que l'on décide si le dispositif terminal est accepté ou rejeté.

La phase 2 montrée à la figure 4 est une phase pour l'établissement d'une clé de session aléatoire destinée à protéger les échanges dispositif terminal-carte SIM. Le dispositif terminal génère une clé de session aléatoire Ks (case 30). Le chiffrement de cette clé est effectué avec un algorithme du type RSA par exemple, (case K32). On utilise une clé Kenc obtenir un message C qui est transmis au SIM avec une demande de génération de clé de session (case K33). La carte SIM déchiffre le message C avec l'algorithme RSA et sa clé Kdec et mémorise la clé Ks obtenue (case L20).
Note : une implantation équivalente pourrait être basée sur un algorithme symétrique tel l'algorithme DES. Dans ce cas, les clés Kenc et Kdec seraient identiques.

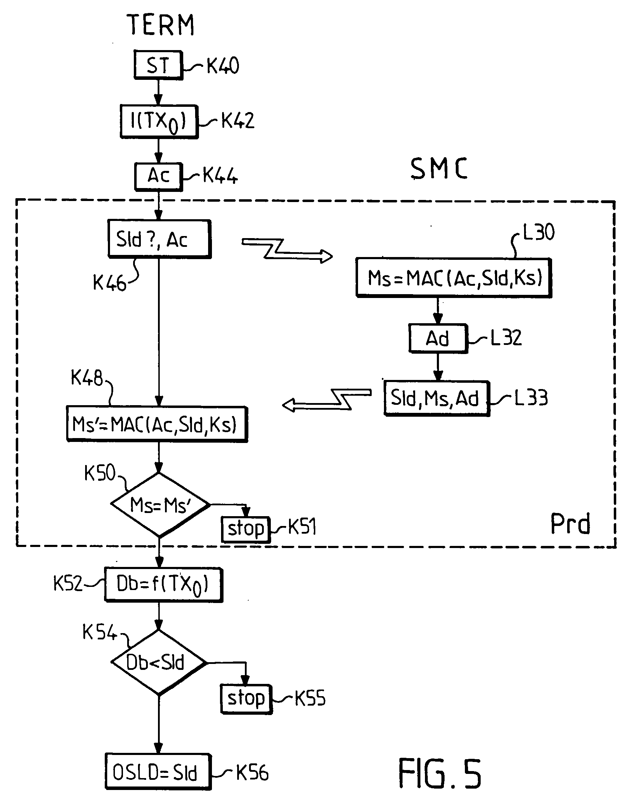

La phase 3 est la phase qui a trait à l'obtention des paramètres de communication et de là, qui doit vérifier si le solde d'unités contenu dans la carte est suffisant pour que la communication soit établie. Cette phase est explicitée à la figure 5.

Après le début de communication (case K40) on obtient, à partir de l'opérateur gestionnaire du réseau, ou à partir d'une table préchargée dans le terminal, des paramètres de tarification. Ceci est indiqué à la case K42. On démarre ensuite une procédure Prd qui permet de récupérer le solde de la carte avec toutes les garanties de sécurité. Cette procédure est déclenchée à partir de la génération d'un aléa Ac (case K44) qui est joint à la demande de solde Sld ? (case K46). La carte SIM calcule alors un certificat appelé MAC sur la valeur Ac et le solde de la manière suivante :
$m1 = Alg_D(Ac, Ks)$ Ks étant la clé de session établie précédemment,

$$m2 = Alg_D(Solde \oplus m1, Ks)$$

où $\oplus$ représente l'opérateur Ou exclusif et

$Alg_D$ un algorithme quelconque notamment l'algorithme DES Ms=les 4 octets de poids fort du résultat m2, constituant le MAC. Ceci est représenté à la case L30. Puis la carte SIM génère un aléa Ad qui sera utilisé pour les demandes de débit ultérieures (case L32). Et finalement, elle transmet au dispositif terminal : Sld(le Solde), Ms et le nouvel aléa Ad (case L33).
Le dispositif terminal, à la réception du Solde et de Ms en vérifie l'intégrité en recalculant :
$m1' = Alg_D(Ac, Ks)$ à partir des valeurs Ac et Ks qu'il a lui-même établies,
$m2' = Alg_D(Solde \oplus m1, Ks)$ à partir du Solde transmis par le SIM Ms'=les 4 octets de poids fort de m2'.
Ceci est indiqué à la case K48. Puis à la case K50 on teste l'égalité de Ms' et Ms. Cette égalité prouve l'intégrité de la valeur du Solde reçue du SIM. Si cette égalité est fausse, alors la communication est interrompue (case K51). Ceci laisse, en effet, présager une tentative de fraude qui doit entraîner une impossibilité d'établir la communication. Puis, on calcule (case K52) l'unité de débit Db à imputer à partir des paramètres reçus selon la case K42. La comparaison de ce solde Db à la valeur de taxation minimum (case K54) permet de décider d'établir ou non la communication. Si on interrompt la communication, on va à la case K55. Si on continue, on va à la case K56 qui indique l'affectation d'une variable OSLD. Cette variable est destinée à contenir la valeur du solde provenant de la carte.
Le dispositif terminal mémorise l'aléa Ad reçu du SIM pour l'utiliser dans sa prochaine demande de débit.

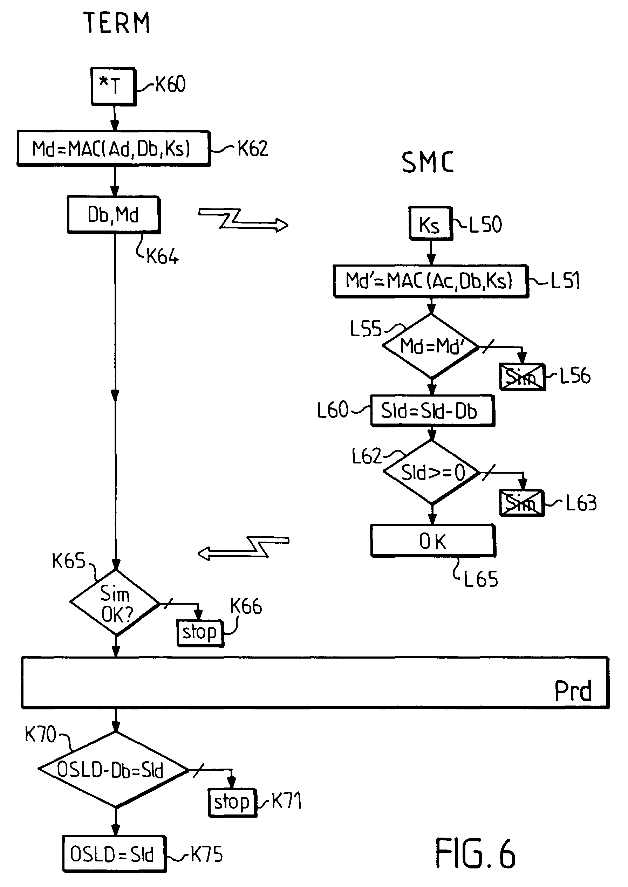

La phase 4 dont l'organigramme est montré à la figure 6 montre le débit qui s'impute sur la carte, lors d'une communication. Cette phase se déclenche dès qu'une taxe doit être imputée case K60. Ceci est déclenché, par exemple périodiquement, par le dispositif terminal qui provoque l'imputation d'une unité de débit Db. L'opération de débit est protégée par un certificat (un MAC) explicite à la case K62. La demande de débit est alors envoyée, case K64, à la carte SIM. Là à partir de la clé Ks sélectionnée (case L50), on détermine un certificat Md' (case L51) et on le compare (case L55) avec le certificat Md transmis depuis le dispositif terminal. Si la comparaison est défavorable la carte SIM est alors mise dans un état de blocage (case L56). Si la comparaison est favorable, on passe alors à la case L60 où est indiquée l'opération de nouveau solde. Il convient de vérifier que le nouveau solde soit positif ce qui est fait à la case L62. Si le solde est négatif, on bloque la carte (case L63). Si le solde est positif aucune autre opération n'est exécutée. La carte se déclare OK (case L65), ce qui est transmis au dispositif terminal.

Il est possible alors, pour le dispositif terminal, de vérifier si la carte SIM est valide ou non en testant cette déclaration (case K65). Si la carte SIM est bloquée il n'y a pas de déclaration OK, la communication est coupée (case K66). Si elle est valide, on continue le processus en effectuant la procédure Prd qui permet de récupérer la valeur du solde. La vérification de la réalité du débit est exécutée (case K70) et la variable OSLD est mise à jour case K75. Si la varification indique que le débit n'a pas été effectué, la communication est coupée (case K71).

L'invention trouve d'autres applications que les réseaux de type GSM, notamment : les réseaux de téléphonie, de transmission de données de type DCS 1800, les terminaux de téléphonie mobiles ou fixes (Publiphones), fax, terminaux de transmission de données ou d'images et aussi terminaux utilisés dans des environnements non sécurisés et non surveillés.

## Revendications

1. Système de transmission comportant une pluralité de dispositifs terminaux pour permettre des communications, munis d'au moins un circuit connectable dans lequel est prévue une information de prépaiement et des moyens pour modifier directement ladite information de prépaiement en fonction de la communication, caractérisé en ce que les dispositifs terminaux comportent des moyens de protection pour assurer l'intégrité des informations relatives au prépaiement.

2. Système selon la revendication 1 comprenant une station de raccordement rattachant des dispositifs terminaux caractérisé en ce que l'information de taxation est déterminée au niveau de ladite station de raccordement.

3. Système selon la revendication 1 caractérisé en ce que l'information de taxation est déterminée au niveau de chaque dispositif terminal par une table contenue dans une mémoire.

4. Système selon au moins l'une des revendications 1 à 3, dans lequel les dispositifs terminaux fonctionnent à l'aide d'informations de fonctionnement emmagasinées dans une mémoire, caractérisé en ce que lesdits moyens de protections sont formés par des moyens de détections de l'intégrité desdites informations de fonctionnement.

5. Système selon au moins l'une des revendications précédentes, caractérisé en ce que lesdits moyens de protections sont formés par des moyens d'authentification du dispositif terminal par le circuit connectable pour permettre la communication lorsque l'authentification est reconnue.

6. Système selon au moins l'une des revendications précédentes, caractérisé en ce que lesdits moyens de protections sont formés par des moyens de protection d'échanges d'informations entre le dispositif terminal et le circuit connectable.

7. Dispositif terminal permettant d'échanger des communications, muni d'au moins un circuit connectable dans lequel est prévue une information de prépaiement relative aux communications et des moyens pour modifier directement ladite information de prépaiement en fonction de la communication, caractérisé en ce qu'il comporte des moyens de protection pour assurer l'intégrité des informations relatives au prépaiement.

8. Dispositif terminal selon la revendication 7, dont le fonctionnement est déterminé à l'aide d'informations de fonctionnement emmagasinées dans une mémoire, caractérisé en ce que lesdits moyens de protection sont formés par des moyens de détection de l'intégrité desdites informations de fonctionnement.

9. Dispositif terminal selon l'une des revendications 7 ou 8, caractérisé en ce que lesdits moyens de protection sont formés par des moyens d'authentification du dispositif terminal par le circuit connectable pour permettre la communication lorsque l'authentification est reconnue.

10. Dispositif terminal selon au moins l'une des revendications 7 à 9, caractérisé en ce que lesdits moyens de protection sont formés par des moyens de protection d'échanges d'informations entre le dispositif terminal et le circuit connectable.

11. Procédé de prépaiement pour un système de transmission comprenant une pluralité de dispositifs terminaux dans lesquels est inséré un circuit connectable de type prépaiement contenant une information de prépaiement pour définir un certain solde et dont le fonctionnement est défini à l'aide d'un logiciel, méthode comprenant les phases suivantes :

   - une phase de démarrage pendant laquelle :

     . on vérifie l'intégrité du logiciel de fonctionnement du dispositif terminal,
     . on vérifie le type du circuit connectable,

   - une phase de transmission de clé depuis le dispositif terminal vers le circuit connectable,
   - une phase d'établissement de connexion pendant laquelle le solde contenu dans le circuit connectable est comparé avec une taxe minimale à imputer,
   - une phase de débit durant la connexion, pendant laquelle le contenu du solde est débité.

12. Procédé de prépaiement selon la revendication précédente, caractérisé en ce que périodiquement l'information de prépaiement est débitée d'une unité de débit.

FIG.1

FIG.2

TERM

- K0
- K2
- K5
  - stop — K6

SMC

- K10
- K12
- $S = Ag(Ks, As)$ — K14
- K18 — Ar
- K20

- L0
- As — L2
- $AS' = Ag(Kv, S)$ — L4
- L6 — $AS = AS'$
  - stop — L8
- $R = AgA3A8(Ki, Ar)$ — L10

FIG.3

TERM

- Ks — K30
- $C = AgR(Kenc, Ks)$ — K32
- $Reg(Ks), C$ — K33

- $Ks = Ag(Kdec, C)$ — L20

FIG.4

EP 0 790 587 A1

FIG.5

8

TERM

*T ─ K60

Md=MAC(Ad,Db,Ks) ─ K62

Db,Md
└ K64

SMC

Ks ─ L50

Md'=MAC(Ac,Db,Ks) ─ L51

L55 ─ Md=Md' ─── Sim ─ L56

L60 ─ Sld=Sld-Db

L62 ─ Sld>=0 ─── Sim ─ L63

OK
└ L65

K65 ─ Sim OK? ─── stop ─ K66

Prd

K70 ─ OSLD-Db=Sld ─── stop ─ K71

OSLD=Sld ─ K75

FIG.6

9

**Office européen des brevets**

**RAPPORT DE RECHERCHE EUROPEENNE**

Numero de la demande

EP 97 20 0344

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | GB 2 265 522 A (MOTOROLA) | 1,7,11, 12 | G07F7/08 H04M17/00 |
| A | * le document en entier * | 2 | |
| | --- | | |
| Y | EP 0 570 924 A (SIEMENS) | 1,7,11, 12 | |
| A | * abrégé; revendications; figure * | 4-6,8-10 | |
| | --- | | |
| A | GB 2 211 050 A (THE GENERAL ELECTRIC COMPANY PIC) * le document en entier * | 1,3,7 | |
| | --- | | |
| A | EP 0 589 757 A (FRANCE TELECOM) * abrégé; figure 1 * * colonne 5, ligne 8 - colonne 7, ligne 17 * | 1,3,11, 12 | |
| | --- | | |
| A | EP 0 622 941 A (TAMURA ELECTRIC WORKS) * abrégé; revendications; figures 1,2 * * colonne 2, ligne 28 - colonne 3, ligne 5 * | 1,3 | **DOMAINES TECHNIQUES RECHERCHES (Int.Cl.6)** |
| | --- | | G07F H04M |
| A | US 5 359 182 A (D.L. SCHILLING) | | |
| | --- | | |
| A | EP 0 621 570 A (FRANCE TELECOM) | | |
| | ----- | | |

Le présent rapport a été établi pour toutes les revendications

| Lieu de la recherche | Date d'achèvement de la recherche | Examinateur |
|---|---|---|
| LA HAYE | 12 Juin 1997 | David, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................

& : membre de la même famille, document correspondant

EPO FORM 1503 03.82 (P04C02)